# EUROPÄISCHE PATENTSCHRIFT

(11) **EP 2 694 342 B1**
(45) Veröffentlichungstag und Bekanntmachung des Hinweises auf die Patenterteilung: **01.04.2015**
(21) Anmeldenummer: 12715027.4
(22) Anmeldetag: 04.04.2012
(51) Int. Cl.: B60T 17/20, B60T 17/08, B61H 13/02

(54) **VORRICHTUNG ZUM ABDECKEN EINES BETÄTIGUNGSELEMENTS, NOTBETÄTIGUNGSEINRICHTUNG UND VERFAHREN ZUM BEFESTIGEN EINER SCHEIBE**
DEVICE FOR COVERING AN ACTUATING ELEMENT, EMERGENCY ACTUATING DEVICE, AND A METHOD FOR SECURING A PANE
DISPOSITIF POUR RECOUVRIR UN ÉLÉMENT D'ACTIONNEMENT, APPAREIL D'ACTIONNEMENT DE SECOURS ET PROCÉDÉ POUR FIXER UNE PLAQUE

(30) Priorität: 07.04.2011 DE 102011016297
(43) Veröffentlichungstag der Anmeldung: 12.02.2014
(73) Patentinhaber: Knorr-Bremse Gesellschaft mit beschränkter Haftung, 2340 Mödling (AT)
(72) Erfinder: HÖLLER, Thomas, A-3325 Ferschnitz (AT); KITA, Lukasz, PL-30-868 Krakow (PL); TAZREITER, Andreas, A-3340 Waidhofen a.d. Ybbs (AT)
(74) Vertreter: Luthe, Stefan
(86) Internationale Anmeldenummer: PCT/EP2012/056145
(87) Internationale Veröffentlichungsnummer: WO 2012/136696

(56) Entgegenhaltungen:
- DE-A1- 2 164 597
- DE-U1-202006 004 871

## Beschreibung

Die vorliegende Erfindung bezieht sich auf eine Vorrichtung zum Abdecken eines Betätigungselements, auf eine Notbetätigungseinrichtung, beispielsweise zum Betätigen einer Tür oder einer Bremse eines Fahrzeugs im Notfall durch einen Passagier, und auf ein Verfahren zum Befestigen einer Scheibe in einer Vorrichtung zum Abdecken eines Betätigungselements.

Eine Notbetätigungseinrichtung wird beispielsweise in einem Schienenfahrzeug eingesetzt, um einem Passagier im Notfall eine Öffnung einer Tür des Schienenfahrzeugs zu ermöglichen. Die Notbetätigungseinrichtung weist als Abdeckung ein Schlagglas auf. Um die Notbetätigungseinrichtung bedienen zu können, ist es erforderlich, das Schlagglas zu zerschlagen.

Die DE 21 64 597 A1 beschreibt eine Notlöseeinheit zur Betätigung der Notbremse in einem Schienenfahrzeug mit einer Klappe zum Abdecken eines Betätigungselements in Form eines Hebels.

Es ist die Aufgabe der vorliegenden Erfindung eine verbesserte Vorrichtung zum Abdecken eines Betätigungselements, eine verbesserte Notbetätigungseinrichtung sowie ein verbessertes Verfahren zum Befestigen einer Scheibe zu schaffen.

Diese Aufgabe wird durch eine Vorrichtung zum Abdecken eines Betätigungselements, durch eine Notbetätigungseinrichtung sowie durch ein Verfahren zum Befestigen einer Scheibe gemäß den Hauptansprüchen gelöst.

Der vorliegenden Erfindung liegt der Gedanke zugrunde, dass es nicht unbedingt erforderlich ist, eine Abdeckscheibe der Notbetätigungseinrichtung zu zerstören, um die Notbetätigungseinrichtung zu betätigen. Stattdessen kann die Abdeckscheibe bewegt werden, um einen Zugriff auf ein Betätigungselement der Notbetätigungseinrichtung freizugeben. Dazu kann die Notbetätigungseinrichtung eine Komponente aufweisen, die die Abdeckscheibe solange in einer Abdeckposition fixiert, bis ein Auslöseereignis stattfindet. Ansprechend auf das Auslöseereignis kann die Komponente die Abdeckscheibe freigeben, wodurch sich die Abdeckscheibe aus der Abdeckposition heraus bewegen kann. Bei dem Auslöseereignis kann es sich um einen Schlag oder allgemein eine Druckausübung auf die Scheibe handeln.

Nach einer Betätigung der Notbetätigungseinrichtung kann dieselbe kostengünstig wiederhergestellt werden, da es nicht erforderlich ist, die Abdeckscheibe zu erneuern. Stattdessen ist es lediglich erforderlich, die Komponente zur Fixierung der Abdeckscheibe wieder in Position zu bringen.

Die vorliegende Erfindung schafft eine Vorrichtung zum Abdecken eines Betätigungselements, mit folgenden Merkmalen:
einer Scheibe zum Abdecken des Betätigungselements;
einem Rahmen zum Aufnehmen der Scheibe, wobei der Rahmen eine innere Öffnung und eine Führung zum Führen einer Bewegung der Scheibe von einer Abdeckposition in eine Zugriffsposition aufweist, wobei die Scheibe in der Abdeckposition die innere Öffnung verschließt und in der Zugriffsposition die innere Öffnung zumindest teilweise freigibt, um einer Bedienperson einen Zugriff auf das Betätigungselement durch die innere Öffnung hindurch zu ermöglichen; und
einem Halteelement, das ausgebildet ist, um die Scheibe in der Abdeckposition zu halten, wenn eine über die Scheibe auf das Halteelement einwirkende Kraft kleiner als eine Auslösekraft ist und das ausgebildet ist, um die Bewegung der Scheibe in die Zugriffsposition freizugeben, wenn eine über die Scheibe auf das Halteelement einwirkende Kraft größer als die Auslösekraft ist.

Das Betätigungselement kann Teil einer Notbetätigungseinrichtung sein. Eine solche Notbetätigungseinrichtung kann beispielsweise im Schienenverkehr eingesetzt werden, um es einer Person zu ermöglichen, eigenständig eine Tür eines Schienenfahrzeugs zu entriegeln oder eine Notbremsung des Schienenfahrzeugs einzuleiten. Dazu kann die Notbetätigungseinrichtung in einem Innenraum des Schienenfahrzeugs oder an einem Bahnsteig angeordnet sein. Alternativ kann die Notbetätigungseinrichtung für beliebige andere Anwendungsgebiete, beispielsweise zur Auslösung eines Feueralarms, vorgesehen sein. Auch kann die Vorrichtung eingesetzt werden, um einen Notschlüssel oder ähnliches abzudecken. In diesem Fall kann es sich bei dem Betätigungselement um den Notschlüssel handeln. Andernfalls kann es sich bei dem Betätigungselement um einen Hebel, einen Schalter oder ähnliches handeln. Die Scheibe kann beispielsweise aus Glas oder Kunststoff und insbesondere aus Acrylglas bestehen. Die Scheibe kann unzerbrechlich ausgeführt sein, in dem Sinne, dass sie intakt bleibt, wenn eine Person zur Betätigung des Bedienelements auf die Scheibe einschlägt. Die Scheibe kann zumindest teilweise transparent sein, so dass das Bedienelement durch die Scheibe hindurch für eine Person erkennbar ist. Der Rahmen kann aus Metall oder Kunststoff gefertigt sein. Der Rahmen kann aus mehreren Einzelteilen zusammengesetzt sein. Der Rahmen kann plattenförmig mit einer in etwa mittig angeordneten Durchgangsöffnung als innere Öffnung ausgeformt sein. Die innere Öffnung kann durch den Rahmen vollständig umschlossen sein. Ein Umriss der inneren Öffnung kann an einen Umriss der Scheibe angepasst sein, wobei die Scheibe größer als die innere Öffnung sein kann. Demnach kann eine Breite der Scheibe größer als eine Breite der inneren Öffnung sein. Ebenso kann eine Länge der Scheibe größer als eine Länge der inneren Öffnung sein. Beispielsweise können die innere Öffnung und die Scheibe rechteckig sein. Die Führung kann durch eine oder mehrere Randflächen des Rahmens und zusätzlich oder alternativ durch ein oder eine Mehrzahl von mit dem Rahmen verbundenen Führungselementen gebildet sein. Beispielsweise können Ränder der sich in der Abdeckposition befindlichen Scheibe in Nuten oder Taschen des Rahmens eingreifen, die an die innere Öffnung angrenzen. Entsprechende Nuten oder Taschen können Teil der Führung sein. Durch die Führung kann die Scheibe somit zum einen in der Abdeckposition gehalten werden. In der Abdeckposition verschließt die Scheibe die innere Öffnung entweder vollständig oder aber soweit, dass eine Betätigung des Betätigungselements durch eine Person verhindert wird. Im montierten Zustand der Vorrichtung kann die Bewegung der Scheibe in die Zugriffsposition, bewirkt durch die Erdanziehung, nach unten erfolgen. Alternativ kann beispielsweise ein Federelement vorgesehen sein, durch das die Scheibe, in diesem Fall in eine beliebige Richtung, in die Zugriffsposition bewegt werden kann. In der Zugriffsposition gibt die Scheibe die innere Öffnung entweder vollständig frei oder verschließt sie nur teilweise, so dass eine Person das Bedienelement betätigen kann. Die Betätigung kann beispielsweise dadurch erfolgen, dass die Person mit der Hand durch die innere Öffnung greift. Um einen Zugriff auf das Bedienelement zu erlangen kann es erforderlich sein, dass die Person gegen die Scheibe drückt oder schlägt, um über die Scheibe eine Kraft auf das Halteelement zu übertragen, die größer als die Auslösekraft ist. Durch die Kraft wird die Scheibe in Richtung des Bedienelements gedrückt. Solange die Kraft kleiner als die Auslösekraft ist, kann das Halteelement eine Bewegung der Scheibe nach innen, in Richtung des Bedienelements, verhindern oder soweit begrenzen, dass die Scheibe in der Abdeckposition gehalten wird. Übersteigt die Kraft die Auslösekraft, so wird das Halteelement entweder verformt oder verschoben und ermöglicht somit eine ausreichend große Bewegung der Scheibe nach innen, um die Scheibe aus der Abdeckposition zu lösen. Wenn das Halteelement im unteren Bereich der Scheibe angeordnet ist, kann die Bewegung der Scheibe nach innen lediglich von dem unteren Bereich der Scheibe ausgeführt werden, die Scheibe kann somit eine Kippbewegung nach innen ausführen, um aus der Abdeckposition gelöst zu werden. Nachdem die Scheibe aus der Abdeckposition gelöst ist, wird die Scheibe durch die Führung nicht weiter fixiert, so dass die Scheibe die Bewegung in die Zugriffsposition ausführen kann. Das Halteelement kann aus Metall oder Kunststoff sein. Das Halteelement kann durch einen Abschnitt des Rahmens der Führung oder durch ein separates Teil gebildet sein. Handelt es sich bei dem Halteelement um ein separates Teil, so kann es starr mit dem Rahmen verbunden sein, so dass es durch die einwirkende Kraft verbogen werden oder zerbrechen kann. Alternativ kann das Halteelement in Richtung der einwirkenden Kraft beweglich mit dem Rahmen verbunden werden, so dass das Halteelement durch die einwirkende Kraft verschoben werden kann.

Gemäß einer Ausführungsform kann die Führung ein Führungselement mit einer Haltefläche und einer Gleitfläche aufweisen. Die Haltefläche kann ausgebildet sein, um einen Randbereich der sich in der Abdeckposition befindlichen Scheibe zu halten. Die Gleitfläche kann ausgebildet sein, um bei der Bewegung der Scheibe in die Zugriffsposition ein Gleiten der Scheibe entlang der Gleitfläche zu ermöglichen. Wenn sich die Scheibe in der Abdeckposition befindet, können sich die Scheibe und das Führungselement in einer Ebene befinden. Dabei kann ein Rand der Scheibe auf der Auflagefläche aufliegen oder anliegen. Haupterstreckungsebenen der Auflagefläche und der Gleitfläche können gegeneinander geneigt sein. Die Auflagefläche und die Gleitfläche können fließend ineinander übergehen. Die Gleitfläche kann parallel oder schräg zu der Bewegungsrichtung der Scheibe in die Zugriffsposition ausgerichtet sein. Die Auflagefläche kann quer oder schräg zu der Bewegungsrichtung der Scheibe in die Zugriffsposition ausgerichtet sein. Durch das Halteelement kann verhindert werden, dass die Scheibe von der Auflagefläche abrutscht. Durch das Führungselement kann die Scheibe zum einen in der Abdeckposition stabilisiert werden und zum anderen in die Zugriffsposition geführt werden.

Der Rahmen kann eine Ausführöffnung aufweisen. Ferner kann die Führung ausgebildet sein, um zumindest einen Randbereich der Scheibe, bei der Bewegung der Scheibe in die Zugriffsposition, durch die Ausführöffnung aus dem Rahmen heraus zu führen. Die Ausführöffnung kann seitlich an dem Rahmen, beispielsweise unten, angeordnet sein. Die Ausführöffnung kann ein Schlitz sein. Durch die Führung kann der Randbereich der Scheibe zu der Ausführöffnung geführt werden. Die Scheibe kann bei Erreichen der Zugriffsposition durch eine geeignete Rückhalteeinrichtung vor einem vollständigen Passieren der Ausführöffnung zurückgehalten werden. Auf diese Weise bleibt die Scheibe mit dem Rahmen verbunden und geht nicht verloren. Alternativ könnte die Scheibe die Ausführöffnung vollständig passieren. Die Ausführöffnung ermöglicht es, dass die Bewegung der Scheibe in die Zugriffsposition nicht durch die Abmessungen des Rahmens begrenzt wird.

Ferner kann die Führung im Bereich des Halteelements eine Aussparung aufweisen, um zumindest einen Abschnitt des Halteelements aufzunehmen, wenn die auf das Halteelement einwirkende Kraft größer als die Auslösekraft ist. Somit kann zumindest der Abschnitt des Halteelements der sich zum Halten der Scheibe in einer Bewegungsbahn der Scheibe von der Abdeckposition in die Zugriffsposition befindet, aus der Bewegungsbahn heraus und in die Aussparung hinein bewegt werden. Auf diese Weise kann ein Verklemmen oder Blockieren der Scheibe bei der Bewegung in die Zugriffsposition verhindert werden. Wird das Halteelement zerbrochen, so kann auch ein abgebrochener Abschnitt des Halteelements von der Aussparung aufgenommen und gesichert werden.

Das Halteelement kann eine Sollbruchstelle aufweisen. Entlang der Sollbruchstelle kann das Halteelement brechen oder sich verbiegen, wenn die auf das Halteelement einwirkende Kraft größer als die Auslösekraft ist. Durch die Sollbruchstelle kann ein Auslöseverhalten des Halteelements auf einfache Weise vorbestimmt werden.

Gemäß einer Ausführungsform kann die Vorrichtung ein Befestigungselement aufweisen, mit dem das Halteelement austauschbar an dem Rahmen befestigt ist. Austauschbar kann bedeuten, dass das Halteelement von dem Rahmen entfernt werden kann, ohne das Halteelement, den Rahmen oder das Befestigungselement zu beschädigen. Beispielsweise kann das Halteelement mittels einer oder mehrerer Schraubverbindung an dem Rahmen befestigt sein. Dadurch kann das Halteelement einfach und kostengünstig ersetzt werden.

Die Scheibe kann in einem Randbereich zumindest ein elastisches Element aufweisen, über das die Scheibe sowohl in der Abdeckposition als auch in der Zugriffsposition mit dem Rahmen verbunden ist. Das elastische Element kann aus Gummi, beispielsweise aus Moosgummi, sein. Das elastische Element kann auf die Scheibe aufgeklebt sein. Beispielsweise kann es sich um einen Streifen handeln, dessen Längserstreckungsrichtung sich quer zur Bewegungsrichtung der Scheibe in die Zugriffsposition erstreckt. Wenn sich die Scheibe in der Abdeckposition befindet, kann eine der Scheibe abgewandte Hauptoberfläche des elastischen Elements flächig an einer Oberfläche des Rahmens anliegen. Dadurch kann das elastische Element als Stoßdämpfer fungieren. Wenn sich die Scheibe in der Zugriffsposition befindet, kann eine Seitenfläche des elastischen Elements an einem der Scheibe zugewandtem Vorsprung des Rahmens anliegen. Beispielsweise kann die Seitenfläche des elastischen Elements an der Haltefläche des Führungselements anliegen. Auf diese Weise kann die Scheibe durch das elastische Element in der Zugriffsposition gehalten werden. Auf jeder Seite der Scheibe kann ein elastisches Element vorgesehen sein.

Die Scheibe kann in zwei gegenüberliegenden Randbereichen undurchsichtig und in einem zwischen den zwei gegenüberliegenden Randbereichen angeordneten Mittelbereich transparent ausgeführt sein. Die undurchsichtigen Bereiche können streifen- oder balkenförmig ausgeführt sein. Der transparente Bereich ermöglicht es einer Person, das Betätigungselement durch die Scheibe hindurch zu erkennen. Durch die undurchsichtigen Bereiche kann dagegen die Sicht auf weitere Elemente verhindert werden, die der Person nicht gezeigt werden sollen. Indem gegenüberliegende Randbereiche undurchsichtig ausgeführt sind, können die weiteren Elemente von der Scheibe sowohl in der Abdeckposition als auch in der Zugriffsposition verdeckt werden. Auch können die undurchsichtigen Bereiche mit Hinweisen für die Person versehen werden.

Gemäß einer Ausführungsform kann der Rahmen ein vorderes Rahmenelement und ein hinteres Rahmenelement aufweisen, die über ein Scharnier miteinander verbunden sein können. Die Scheibe kann innerhalb des vorderen Rahmenelements angeordnet sein. Das Führungselement und das Halteelement können an dem vorderen Rahmenelement angeordnet sein. Sowohl das vordere als auch das hintere Rahmenelement können einen Schichtaufbau, beispielsweise aus mehreren Blechen, aufweisen. Im aufgeklappten Zustand kann das Halteelement ausgetauscht werden. Alternativ zu einem Scharnier können andere Verbindungsmittel vorgesehen sein. Das Scharnier hat den Vorteil, dass die Rahmenelemente im aufgeklappten Zustand weiterhin verbunden sind.

Die vorliegende Erfindung schafft ferner eine Notbetätigungseinrichtung, mit folgenden Merkmalen:
einem Betätigungselement zum Betätigen der Notbetätigungseinrichtung;
einem Gehäuse, in dem das Betätigungselement angeordnet ist, wobei das Gehäuse eine Öffnung aufweist; und
einer Vorrichtung zum Abdecken eines Betätigungselements gemäß einer der vorangegangenen Ausführungsformen, wobei der Rahmen der Vorrichtung an dem Gehäuse befestigt ist und sich die innere Öffnung des Rahmens im Bereich der Öffnung des Gehäuses befindet, um einer Bedienperson einen Zugriff auf das Betätigungselement zu ermöglichen, wenn sich die Scheibe in der in der Zugriffsposition befindet.

Die Notbetätigungseinrichtung kann als Kasten ausgeformt sein, der beispielsweise an einer Wand befestigt werden kann. Das Gehäuse kann aus Metall oder Kunststoff gefertigt sein. Das Gehäuse kann einen Boden und eine Wand aufweisen. Die Wand kann umlaufend ausgeführt sein. Die Wand kann die Öffnung des Gehäuses umschließen. Somit kann das Gehäuse wannenförmig sein. Der Rahmen kann auf der Wand des Gehäuses aufliegen und somit einen Deckel für das Gehäuse ausbilden. Das Betätigungselement kann eine mechanische oder elektrische Schnittstelle aufweisen, über die eine Information über eine Betätigung des Betätigungselements weitergeleitet werden kann. Ein mit der Schnittstelle verbundenes mechanisches oder elektrisches Bauteil kann durch die Wand geführt sein. Dazu kann die Wand eine Aussparung aufweisen.

Die vorliegende Erfindung schafft ferner ein Verfahren zum Befestigen einer Scheibe in einer Vorrichtung zum Abdecken eines Betätigungselements gemäß einer Ausführungsform der Erfindung, wobei das Verfahren die folgenden Schritte umfasst:
Bewegen des Halteelements der Vorrichtung in eine Halteposition zum Halten der Scheibe in der Abdeckposition; und
Befestigen des Halteelements an dem Rahmen der Vorrichtung.

Das Verfahren kann ausgeführt werden, um die Scheibe nach einer Betätigung der Vorrichtung von der Zugriffsposition zurück in die Abdeckposition zu bringen. Dabei kann es erforderlich sein, die Vorrichtung mit einem neuen Halteelement zu versehen. Ein rückführen der Scheibe von der Zugriffsposition in die Abdeckposition kann durch die Ausführöffnung erfolgen. Um die Scheibe in die Führung einzubringen, kann ein Auseinandernehmen der Einheit erforderlich sein, wenn eine Einführung der Scheibe durch die Ausführöffnung der Einheit, beispielsweise aufgrund von Moosgummistreifen, nicht möglich ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Frontansicht einer Notbetätigung;
- Fig. 2: eine Teilansicht einer Notbetätigung;
- Fig. 3: eine Schnittansicht einer Notbetätigung;
- Fig. 4: eine weitere Schnittansicht einer Notbetätigung;
- Fig. 5: eine weitere Schnittansicht einer Notbetätigung; und
- Fig. 6: eine Ansicht einer Vorrichtung zum Abdecken eines Betätigungselements.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

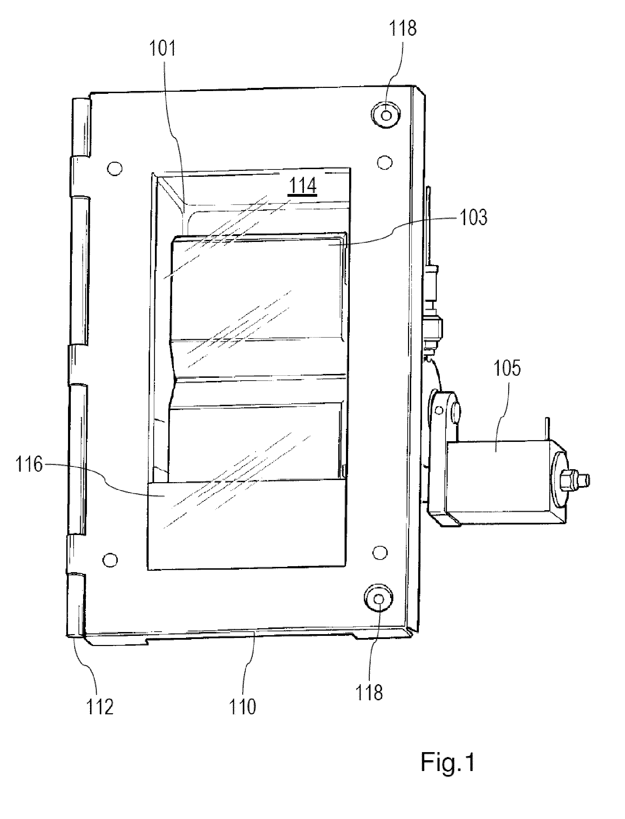

Fig. 1 zeigt eine Notbetätigung mit einer Vorrichtung zum Abdecken eines Betätigungselements in Form eines Schlagglasdeckels, gemäß einem Ausführungsbeispiel der vorliegenden Erfindung.

Die Notbetätigung weist ein Gehäuse 101 auf, in dem ein Betätigungselement in Form eines Hebels 103 angeordnet ist. Das Gehäuse 101 ist schalenförmig, so dass das Gehäuse 101 an einer dem Boden des Gehäuses 101 gegenüberliegenden Vorderseite eine Öffnung aufweist. Dadurch ist der Hebel 103 von der Vorderseite der Notbetätigung her sichtbar. Eine Wand des Gehäuses 101 erstreckt sich über den Hebel 103 hinaus, so dass der Hebel 103 vollständig von einem Innenraum des Gehäuses 101 aufgenommen ist. Ein freies Ende des Hebels 103 bildet einen Griff und ist von einem in Fig. 1 oben gezeigten oberen Wandabschnitt des Gehäuses 101 so weit entfernt, dass eine Person das freie Ende des Hebels 103 mit einer Hand umgreifen kann, und den Hebel 103 durch Zug an dem freien Ende betätigen kann. Durch Betätigung des Hebels 103 führt der Hebel 103 eine Schwenkbewegung auf, die auf ein sich außerhalb des Gehäuses 101 befindliches Element 105 der Notbetätigung übertragen wird.

Die Vorrichtung zum Abdecken eines Betätigungselements schließt das Gehäuse 101 auf der Vorderseite ab. Die Vorrichtung ist plattenförmig und bildet im montierten Zustand einen Deckel für das Gehäuse 101. Die Vorrichtung weist einen Rahmen auf, der an der Wand des Gehäuses 101 befestigt ist. In Fig. 1 ist von dem Rahmen eine vordere Abdeckung 110 gezeigt. Der Rahmen weist ein vorderes Rahmenelement und ein hinteres Rahmenelement auf, die über ein Scharnier 112 miteinander verbunden sind. Das Scharnier 112 erstreckt sich entlang einer Längsseite des Rahmens. Der Rahmen ist rechteckig und weist ein rechteckiges Fenster auf. Das Fenster weist eine größere Länge als Breite auf. Eine Breite des Fensters ist größer als eine Breite des Hebels 103. Ebenso ist eine Länge des Fensters größer als eine Länge des Hebels 103. Der Hebel 103 ist in etwa mittig in Bezug auf das Fenster angeordnet. Somit überlappen sich die vordere Abdeckung 110 und der Hebel 103 nicht. Der Rahmen weist eine Scheibe 114 auf, die das Fenster des Rahmens verschließt. Die Scheibe 114 ist innerhalb des Rahmens geführt. Der sich innerhalb des Fensters befindliche Bereich der Scheibe 114 ist abgesehen von einem unteren Randbereich 116 transparent. Somit ist der Hebel 103 durch die Scheibe 114 hindurch sichtbar. Der untere Randbereich 116 ist über die gesamte Breite des Fensters bis zu einem unteren Rand des Fensters undurchsichtig. Ein Übergang zwischen dem transparenten und dem undurchsichtigen Bereich der Scheibe 114 ist geradlinig ausgeführt. Durch den undurchsichtigen Bereich 116 wird eine Mechanik zwischen dem Hebel 103 und dem Element 105 der Notbetätigung verdeckt. Der Rahmen weist zwei Durchgangslöcher 118 auf, über die der Rahmen an dem Gehäuse 101 befestigt werden kann.

In der in Fig. 1 gezeigten Darstellung befindet sich die Scheibe 114 in einer Abdeckposition, in der das Fenster des Rahmens vollständig durch die Scheibe 114 verschlossen ist. Zur Betätigung des Hebels 103 muss die Scheibe 114 aus der Abdeckposition in eine Zugriffsposition bewegt werden, in der das Fenster, zumindest in einem Zugriffsbereich auf den Hebel 103, nicht mehr durch die Scheibe 114 verschlossen ist.

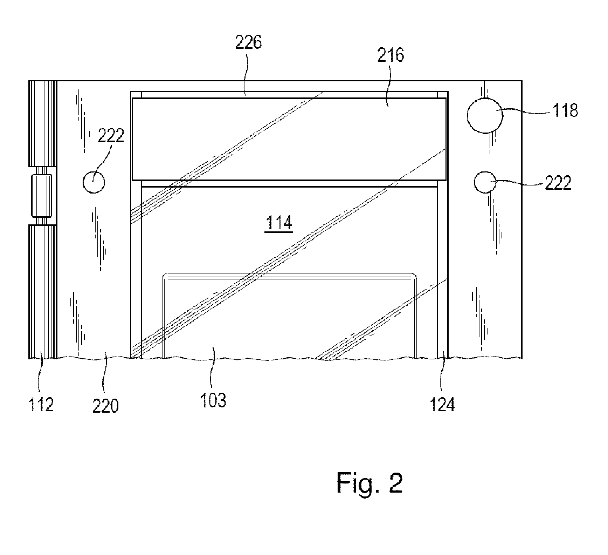

Fig. 2 zeigt einen Abschnitt der in Fig. 1 gezeigten Notbetätigung, gemäß einem Ausführungsbeispiel der vorliegenden Erfindung. Gezeigt ist ein oberer Abschnitt der Notbetätigung, ohne die in Fig. 1 gezeigte Abdeckung 110. Die Scheibe weist in einem oberen Randabschnitt einen weiteren undurchsichtigen Bereich 216 auf. Solange sich die Scheibe 114 in der Abdeckposition befindet, ist der der weitere undurchsichtige Bereich 216 unter der Abdeckung angeordnet. Unter der Abdeckung befindet sich ferner eine in Fig. 2 gezeigte vordere Rahmenplatte 220. Die vordere Rahmenplatte 220 weist entsprechend zu der Abdeckung ein Fenster auf. Dabei ist das Fenster der vorderen Rahmenplatte 220 größer als das Fenster der Abdeckung, so dass die vordere Rahmenplatte 220 vollständig durch die Abdeckung verdeckt wird. Das Fenster der vorderen Rahmenplatte 220 weist eine größere Breite und eine größere Länge als die Scheibe 114 auf.

Die vordere Rahmenplatte 220 weist neben dem Durchgangsloch 118 weitere Durchgangslöcher auf, durch die eine vordere Führungsplatte 222 des Rahmens erkennbar ist. Die vordere Führungsplatte 222 weist entsprechend zu der vorderen Rahmenplatte 220 ein Fenster auf, wobei das Fenster der vorderen Führungsplatte 222 gleich groß oder größer als das Fenster der vorderen Rahmenplatte 220 ist, so dass die vordere Führungsplatte 222 durch die vordere Rahmenplatte 220 verdeckt wird.

Ferner ist eine hintere Führungsplatte 224 des Rahmens erkennbar. Die hintere Führungsplatte 224 weist entsprechend zu der vorderen Rahmenplatte 220 ein Fenster auf, wobei das Fenster der hintere Führungsplatte 224 eine geringere Breite als das Fenster der vorderen Rahmenplatte 220 aufweist, so dass sich seitliche Randbereiche der hinteren Führungsplatte 224 in das Fenster der vorderen Rahmenplatte 220 hinein erstrecken.

Ferner ist eine hintere Rahmenplatte 226 des Rahmens erkennbar. Die hintere Rahmenplatte 226 weist entsprechend zu der vorderen Rahmenplatte 220 ein Fenster auf, wobei das Fenster der hintere Rahmenplatte 226 eine geringere Länge als das Fenster der vorderen Rahmenplatte 220 aufweist, so dass sich zumindest ein oberer Randbereich der hinteren Führungsplatte 224 in das Fenster der vorderen Rahmenplatte 220 hinein erstreckt.

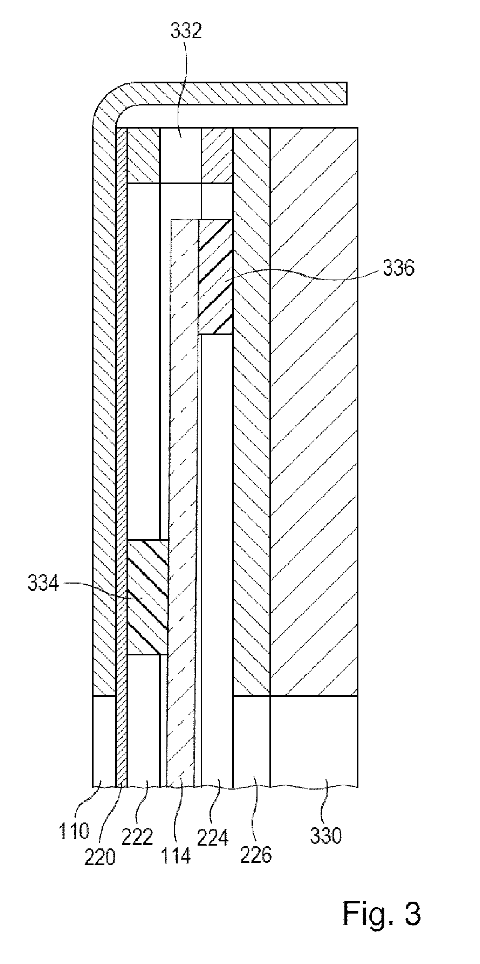

Fig. 3 zeigt einen Abschnitt der in Fig. 1 gezeigten Vorrichtung zum Abdecken eines Betätigungselements, gemäß einem Ausführungsbeispiel der vorliegenden Erfindung. Gezeigt ist eine Schnittdarstellung durch einen oberen Abschnitt der Vorrichtung. Die Notbetätigung weist einen Schichtaufbau auf. Von links nach rechts ist die Abdeckung 110, die vordere Rahmenplatte 220, die vordere Führungsplatte 222, die hintere Führungsplatte 224, die hintere Rahmenplatte 226 und eine Befestigungsplatte 330 gezeigt. Zwischen der vorderen Führungsplatte 222 und der hinteren Führungsplatte 224 ist ein Freiraum 332, in dem die Scheibe 114 angeordnet ist.

Auf gegenüberliegenden Oberflächen der Scheibe 114 ist jeweils ein elastisches Element 334, 336 angeordnet. Die elastischen Elemente 334, 336 sind innerhalb des in Fig. 2 gezeigten bedruckten Bereich 216 angeordnet. Die elastischen Element 334, 336 erstrecken sich über eine gesamte Breite der Scheibe 114. Das elastische Element 334 erstreckt sich über eine Dicke der vorderen Führungsplatte 222 und liegt an der vorderen Rahmenplatte 220 an. Das elastische Element 336 erstreckt sich über eine Dicke der hinteren Führungsplatte 224 und liegt an der hinteren Rahmenplatte 226 an. Die Scheibe 114 ist schräg innerhalb des Freiraums 332 angeordnet, so dass ein in Fig. 3 gezeigtes oberes Ende der Scheibe 114 an der hinteren Führungsplatte 224 und ein in nicht Fig. 3 gezeigtes unteres Ende der Scheibe 114 an der vorderen Führungsplatte 222 anliegen. Die vordere Rahmenplatte 220, die vordere Führungsplatte 222, die hintere Führungsplatte 224 und die hintere Rahmenplatte 226 bilden den Freiraum 332 als Taschenführung für die Scheibe 114. Dabei ist der Freiraum 332 größer als eine Dicke der Scheibe 114, so dass sich die Scheibe 114 innerhalb des Freiraums 332 bewegen kann.

Ein Randbereich der Abdeckung 110 weist eine Biegung auf und erstreckt sich über die in Fig. 3 gezeigten oberen Enden der vordere Rahmenplatte 220, der vorderen Führungsplatte 222, der hinteren Führungsplatte 224, der hinteren Rahmenplatte 226 und der Befestigungsplatte 330. Somit bildet die Abdeckung 110 neben einer vorderen Abdeckung auch eine seitliche Abdeckung des Rahmens aus.

Die Abdeckung 110, die vordere Rahmenplatte 220, die vordere Führungsplatte 222, die hintere Führungsplatte 224, die hintere Rahmenplatte 226 und die Befestigungsplatte 330 können als Bleche ausgebildet sein. Das die Abdeckung 110, die vordere Rahmenplatte 220 und die vordere Führungsplatte 220 umfassende vordere Rahmenelement kann alternativ auch aus einem Stück oder aus zusätzlichen Elementen aufgebaut werden. Entsprechend kann das die hintere Führungsplatte 224, die hintere Rahmenplatte 226 und die Befestigungsplatte 330 umfassende vordere Rahmenelement alternativ auch aus einem Stück oder aus zusätzlichen Elementen aufgebaut werden.

Die Befestigungsplatte 330 kann als Befestigungsblech ausgeführt sein. Die Befestigungsplatte 330 kann auf das Gehäuse der Notbetätigung aufgesetzt werden und an dem Gehäuse befestigt werden.

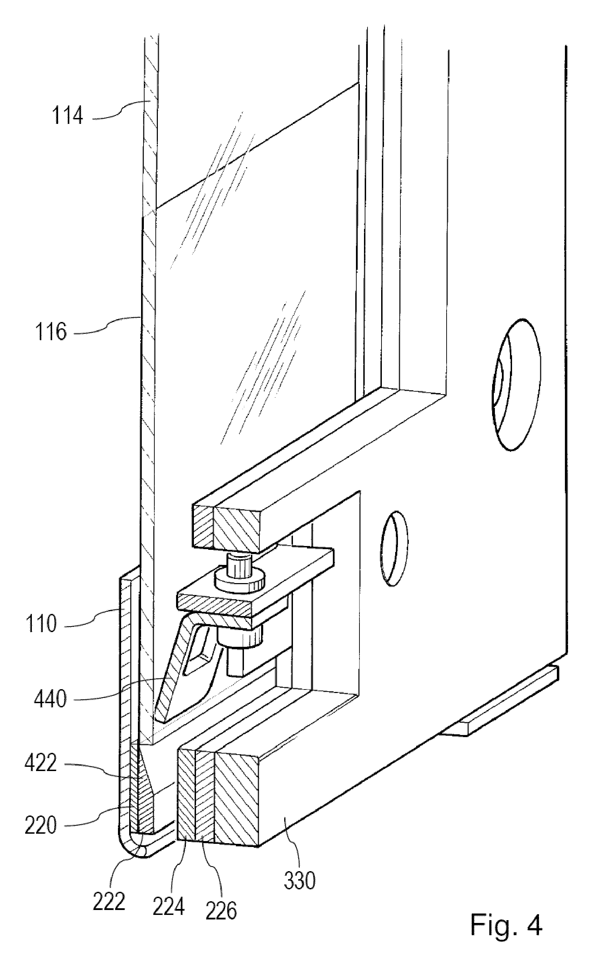

Fig. 4 zeigt einen Abschnitt der in Fig. 1 gezeigten Vorrichtung zum Abdecken eines Betätigungselements, gemäß einem Ausführungsbeispiel der vorliegenden Erfindung. Gezeigt ist eine Schnittdarstellung durch einen unteren und mittleren Abschnitt der Vorrichtung. Gezeigt sind Teilabschnitte der Abdeckung 110, der vorderen Rahmenplatte 220, der vorderen Führungsplatte 222, der Scheibe 114, der hinteren Führungsplatte 224, der hinteren Rahmenplatte 226 und der Befestigungsplatte 330. Zu erkennen ist, dass die Elemente 110, 220, 222, 224, 226, 330 ein Fenster ausbilden, über das sich die Scheibe 114 erstreckt. Die in Fig. 4 gezeigte Darstellung zeigt einen Längsschnitt, der in Längsrichtung entlang einer Mittellinie der Scheibe 114 verläuft. Ein unterer nicht transparenter Bereich 116 der Scheibe 114 erstreckt sich bis zu einem unteren Rand der Scheibe.

Die Scheibe 114 liegt mit ihrem unteren Rand auf einem Führungselement 422 auf, dass durch einen unteren Abschnitt der vorderen Führungsplatte 222 gebildet wird. Das Führungselement 422 weist auf der, der hinteren Führungsplatte 224 zugewandten Seite, eine Schräge auf. Die Schräge läuft spitz zu. Die Scheibe 114 liegt somit auf einer spitzen Längskante der vorderen Führungsplatte 222 auf. Die spitze Längskante bildet somit eine Haltefläche für die Scheibe 114. Der untere Abschnitt der vorderen Führungsplatte 222 und ein gegenüberliegender Bereich der hinteren Führungsplatte 224 sind voneinander beabstandet und bilden einen Teil eines Freiraums zum Bewegen der Scheibe 114. Somit bildet die Abschrägung des Führungselements 440 eine Gleitfläche für die Scheibe 114.

Die Vorrichtung weist ein Halteelement 440 auf. Das Halteelement 440 ist an der hinteren Führungsplatte 224 befestigt. Das Halteelement 440 ist ausgebildet, um die Scheibe 114 in einer Abdeckposition zu halten, in der die Scheibe 114 auf dem Führungselement 422 aufliegt. Das Halteelement 440 ist als ein längliches Element, beispielsweise eine Lasche, ausgeführt, das sich ausgehend von der hinteren Führungsplatte 224 schräg in Richtung der Scheibe 114 erstreckt und die Scheibe 114 mit einem freien Ende berührt. Hier erstreckt sich das Halteelement 440 schräg nach unten. Zur Befestigung des Halteelements 440 weist die hintere Führungsplatte 224 einen abgewinkelten Bereich auf, der sich durch eine weitere Aussparung der hinteren Rahmenplatte 226 und der Befestigungsplatte 330 erstreckt. Das Halteelement 440 kann mittels einer Schraubverbindung an dem abgewinkelten Bereich befestigt sein. Dazu kann das Halteelement 440 ein in Längsrichtung des Halteelements 440 verlaufendes Langloch aufweisen. Das Langloch kann dazu dienen, das Halteelement 440 bei der Montage in Position zu bringen.

Wird die Scheibe 114 durch eine Druckbeaufschlagung gegen das Halteelement 440 gedrückt, so kann das Halteelement 440 brechen oder sich verbiegen. Dadurch wird das freie Ende des Halteelements 440 zu der hinteren Führungsplatte 224 hin gedrückt und kann von der weiteren Aussparung der hinteren Rahmenplatte 226 und der Befestigungsplatte 330 aufgenommen werden. Die Abschrägung des Führungselements 422 bewirkt, das die Scheibe 114 nach oder während der Bewegung des freien Endes des Halteelements 440 entlang der Abschrägung, hier nach unten, rutscht. Die Scheibe 114 führt somit zumindest mit dem an dem Führungselement 422 anliegenden Bereich zunächst eine Bewegung senkrecht zur Haupterstreckungsebene der Scheibe 114, hier nach hinten, und anschließend eine Bewegung quer zur Haupterstreckungsebene der Scheibe 114, hier nach unten, aus.

Die Abdeckung 110 ist um die unteren Enden der vorderen Rahmenplatte 220, der vorderen Führungsplatte 222, der hinteren Führungsplatte 224, der hinteren Rahmenplatte 226 und der Befestigungsplatte 330 herumgeführt. Dabei weist die Abdeckung 110 jedoch innerhalb eines mittleren Bereichs, in dem die Scheibe 114 angeordnet ist, einen Freiraum auf. Somit setzt der Freiraum der Abdeckung 110 den zwischen der vorderen Führungsplatte 222 und der hinteren Führungsplatte 224 gebildeten Freiraum fort. Die Scheibe 114 kann sich bei einer Bewegung in die Zugriffsposition zwischen den unteren Abschnitten der vorderen Führungsplatte 222 und der hinteren Führungsplatte 224 hindurch zu dem Freiraum der Abdeckung 110 und durch den Freiraum der Abdeckung 110 hindurch bewegen.

Eine solche Bewegung der Scheibe 114 kann dadurch beendet werden, dass eines der elastischen Elemente der Scheibe 114 auf dem Führungselement 422 und das andere elastische Element der Scheibe 114 auf einem Randbereich der hinteren Führungsplatte 224 aufsetzt. Ein solcher Randbereich der hinteren Führungsplatte 224 kann beidseitig des abgewinkelten Bereichs der hinteren Führungsplatte 224 angeordnet sein.

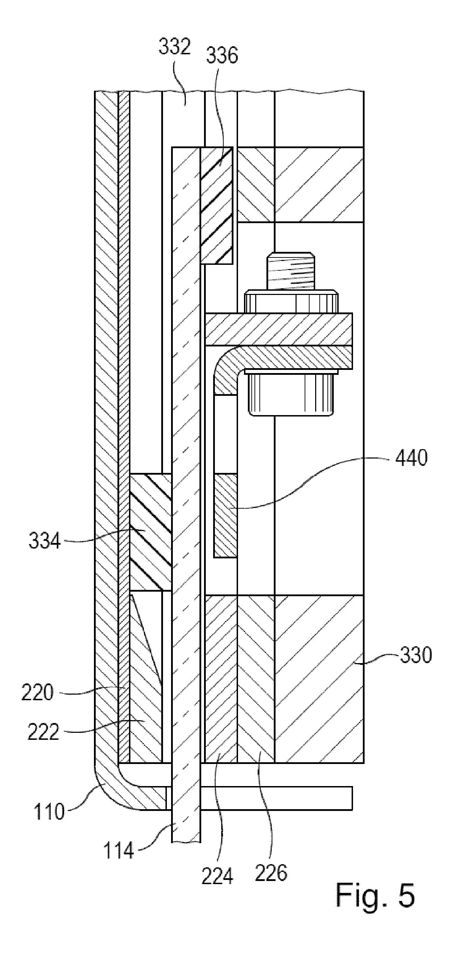

Fig. 5 zeigt eine Schnittdarstellung durch einen unteren Abschnitt der in Fig. 4 gezeigten Vorrichtung zum Abdecken eines Betätigungselements, gemäß einem Ausführungsbeispiel der vorliegenden Erfindung. Gezeigt sind die Abdeckung 110, die vordere Rahmenplatte 220, die vordere Führungsplatte 222, die Scheibe 114, die hintere Führungsplatte 224, die hintere Rahmenplatte 226, die Befestigungsplatte 330 und das Halteelement 440.

Im Unterschied zu Fig. 4 weist das Halteelement 440 in Fig. 4 an einer Biegekante eine stärkere Biegung auf. Ein freies Ende des Halteelements 440 verläuft parallel oder nahezu parallel zu einer Haupterstreckungsrichtung der hinteren Führungsplatte 224. Auf diese Weise wird die Scheibe 114 durch das Halteelement 440 nicht an einer Bewegung aus der in Fig. 4 gezeigten Abdeckposition in eine Zugriffsposition gehindert. Das freie Ende des Halteelements 440 ist durch einen über die Scheibe 114 ausgeübten Druck in die in Fig. 5 gezeigte Position gebracht worden. Dadurch kann das Halteelement 440 irreversibel verformt worden sein.

Von der Scheibe 114 ist der obere Abschnitt mit den mit den beidseitigen elastischen Elementen 334, 336 gezeigt. Ein unterer und ein mittlerer Abschnitt der Scheibe 114 erstrecken sich aus dem unteren Freiraum der Abdeckung 110 heraus. Das vordere elastische Element 334 liegt auf dem Führungselement 422 und das hintere elastische Element 336 auf einem Randbereich der hinteren Führungsplatte 224 auf.

In der in Fig. 5 gezeigten Darstellung befindet sich die Scheibe 114 in der Zugriffsposition, in der das Fenster, zumindest in einem Zugriffsbereich auf den in Fig. 1 gezeigten Hebel 103, nicht mehr durch die Scheibe 114 verschlossen ist.

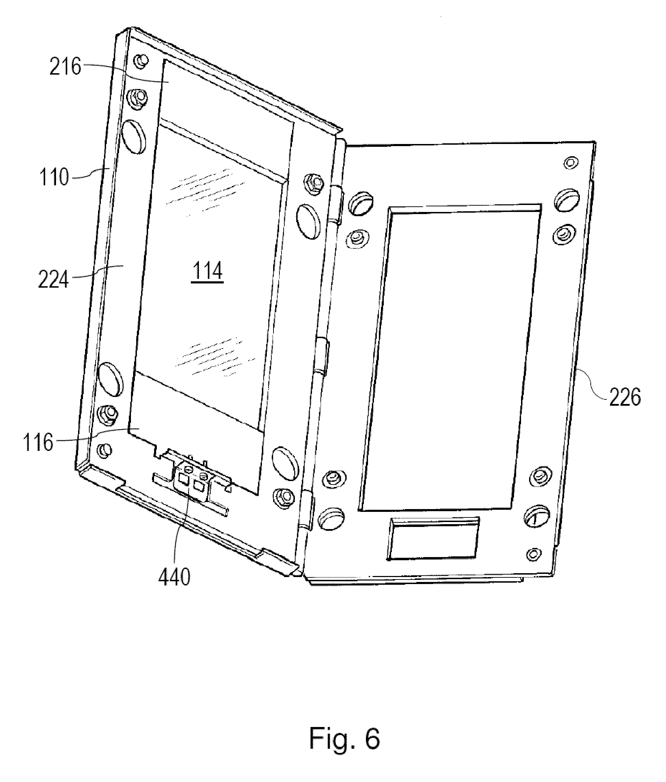

Fig. 6 zeigt die in Fig. 1 gezeigten Vorrichtung zum Abdecken eines Betätigungselements, gemäß einem Ausführungsbeispiel der vorliegenden Erfindung. Die Vorrichtung ist in einem aufgeklappten Zustand gezeigt. Zu erkennen ist das vordere Rahmenelement mit der Abdeckung 110, der Scheibe 114 und der hinteren Führungsplatte 224 mit dem Halteelement 440. Von der Scheibe 114 sind die undurchsichtigen Bereiche 116, 216 gezeigt. Ferner ist das hintere Rahmenelement mit der hinteren Rahmenplatte 226 und der Befestigungsplatte zu erkennen. Das vordere Rahmenelement und das hintere Rahmenelement sind über das Scharnier 112 miteinander verbunden. Das hintere Rahmenelement weist unterhalb des Fensters für die Scheibe 114 die weitere Aussparung zur Aufnahme des Halteelements 440 auf.

Um die Scheibe 114 bei einer erfolgten Betätigung der Notbetätigung wieder in die Zugriffsposition zu bringen, kann die Vorrichtung, wie in Fig. 6 dargestellt ist, aufgeklappt werden. Anschließend kann die Scheibe 114 durch den unteren Freiraum der Abdeckung 110 zurück in den Rahmen geschoben werden, bis die Scheibe 114 die in Fig. 6 gezeigte Position einnimmt. Beispielsweise kann die Scheibe 114 dazu nach oben geschoben werden, bis sie an einem oberen Anschlag des Rahmens anschlägt. Ferner kann das Halteelement 440 erneuert werden, in dem die Befestigung des verformten alten Halteelements 440 gelöst, das alte Halteelement 440 entfernt und ein neues Halteelement 440 eingesetzt wird. Zum Positionieren des Halteelements 440 kann dieses in Richtung der Scheibe 114 bewegt, mit dem freien Ende gegen die Scheibe 114 gedrückt und in dieser Halteposition gehalten werden. Durch das Positionieren des Halteelements 440 wird die Scheibe 114 in die Abdeckposition bewegt, sofern die Scheibe 114 die Abdeckposition nicht bereits eingenommen hat. Während sich das Halteelement 440 in der Halteposition befindet, kann das Halteelement 440 mittels der Befestigung fest an der hinteren Führungsplatte befestigt werden. Die beschriebenen Schritte des Aufklappens des Rahmens, des Bewegens der Scheibe 114 und des erneuern des Halteelements 440 können auch in einer anderen als der beschriebenen Reihenfolge ausgeführt werden.

Im Folgenden wird anhand der Figuren 1 bis 6 als weiteres Ausführungsbeispiel der vorliegenden Erfindung eine Schlagglasabdeckung für eine Innennotbetätigung in einer klappbaren Ausführung beschrieben. Die Innennotbetätigung ist für ein Fahrzeug zur Personenbeförderung vorgesehen.

Dazu zeigt Fig. 1 eine Frontansicht einer Notbetätigung mit Schlagglasdeckel. Wie in Fig. 1 gezeigt, wird eine Schlagglaseinheit auf eine Notbetätigung aufgesetzt und verdeckt diese vollständig. Der Betätigungshebel 103 der Notbetätigung 105 selbst wird nur durch eine dünne Acrylglasscheibe 114 abgedeckt. Die Acrylglasscheibe 114 ist außen bedruckt, sodass für den Passagier lediglich der Betätigungshebel 103 der Notbetätigung sichtbar ist. Zudem können in diesem bedruckten Bereich 116 noch Anweisungen für den Passagier in Signalfarbe angebracht werden.

Wie in Fig. 2 gezeigt, liegt das Schlagglas 114 selbst innerhalb der Einheit, geführt in einer Tasche und von verschiedenen Komponenten in Position gehalten. Die seitliche Führung erfolgt durch eine taschenförmige Ausnehmung des Gehäuses 110, 220, 222, 224, 226, 330. Durch die taschenförmige Ausnehmung wird das Schlagglas 114 nach dem Einschlagen in die gewünschte Position geführt. Eine entsprechende Taschenführung des Schlagglases 114 ist in Fig. 2 in einer Ansicht ohne die Abdeckung 110 gezeigt.

Wie in Fig. 3 gezeigt wird das Schlagglas 114 im oberen Bereich der Einheit über zwei Moosgummistreifen 334, 336, jeweils einen an der Vorder- und Hinterkante, in Position gehalten. Diese dienen gleichzeitig als Stoßdämpfer und absorbieren Vibrationen während des Fahrbetriebs. Entsprechend dazu ist in Fig. 3 eine obere Führung der Schlagglasscheibe 114 in einer Seitenansicht als Schnitt durch die Mitte gezeigt.

Wie in Fig. 4 gezeigt, erfolgt eine Stabilisierung der Schlagglasscheibe 114 im unteren Bereich der Einheit. Die Stabilisierung verhindert eine ungewollte Selbstauslösung und besteht im Wesentlichen aus einer Auflagefläche 422 für die Fixierung in vertikaler Richtung und einer Brechlasche 440 mit Sollbruchstelle welche das Schlagglas 114 daran hindert, die Auflagefläche 422 zu verlassen. Eine entsprechende Stabilisierung im unteren Bereich ist in Fig. 4 als Schrägansicht von hinten und Schnitt durch die Mitte gezeigt.

Bei einem Einschlagen des Schlagglases 114 bricht die Brechlasche 440 an der Sollbruchstelle, wodurch die Scheibe 114 nicht mehr in Position gehalten wird. Durch den Schlagimpuls verlässt das Schlagglas 114 die Auflagefläche 422 und gleitet innerhalb der Taschenführung nach unten. Während dieser Gleitbewegung wird das Schlagglas 114 nicht von der Brechlasche 440 beeinflusst, da diese in einem dafür vorgesehenen Freiraum verschwindet beziehungsweise bei ungewollten abreißen der Lasche vom Grundkörper nach hinten wegfallen kann. Für die Stabilisierung der Schlagglasscheibe 114 während der Fallbewegung sorgen seitlich die Taschenführung und senkrecht dazu die beiden Moosgummistreifen 334, 336. Diese Streifen 334, 336 verhindern auch, dass das Schlagglas 114 nach unten wegfallen kann und möglicherweise auf dem Fußboden zerbricht. Dies wird dadurch gewährleistet, dass sowohl die Auflagefläche 422 die zuvor das Schlagglas 114 in Position gehalten hat als auch eine zusätzlich vorgesehene Anschlagfläche als Endanschlag für die Moosgummistreifen 334, 336 dienen und somit die Bewegung der Schlagglasscheibe 114 stoppen.

Die beschriebenen Ausführungsbeispiele sind nur beispielhaft gewählt und können miteinander kombiniert werden. Auch wenn anhand der Figuren beispielhaft eine Bewegung der Scheibe 114 nach unten in die Zugriffsposition beschrieben ist, so kann die Bewegung der Scheibe 114 auch in andere Richtungen erfolgen, wenn beispielsweise geeignete Druck- oder Zugelemente vorgesehen sind. In diesem Fall wird eine Anordnung und Ausrichtung der beschriebenen Führungs- und Halteelemente entsprechend angepasst.

### Bezugszeichenliste

- 101: Gehäuse
- 103: Hebel
- 110: Abdeckung
- 112: Scharnier
- 114: Scheibe
- 116: undurchsichtiger Bereich
- 118: Durchgangsloch
- 216: undurchsichtiger Bereich
- 220: vordere Rahmenplatte
- 222: vordere Führungsplatte
- 224: hintere Führungsplatte
- 226: hintere Rahmenplatte
- 330: Befestigungsplatte
- 332: Freiraum
- 334: elastisches Element
- 336: elastisches Element
- 422: Führungselement
- 440: Halteelement

## Patentansprüche

1. Vorrichtung zum Abdecken eines Betätigungselements (103), mit folgenden Merkmalen:
einer Scheibe (114) zum Abdecken des Betätigungselements (103);
einem Rahmen (110; 220, 222, 224, 226; 330, 332) zum Aufnehmen der Scheibe, wobei der Rahmen eine innere Öffnung und eine Führung (220, 222, 224; 332) zum Führen einer Bewegung der Scheibe von einer Abdeckposition in eine Zugriffsposition aufweist, wobei die Scheibe in der Abdeckposition die innere Öffnung verschließt und in der Zugriffsposition die innere Öffnung zumindest teilweise freigibt, um einer Bedienperson einen Zugriff auf das Betätigungselement durch die innere Öffnung hindurch zu ermöglichen;
einem Halteelement (440), das ausgebildet ist, um die Scheibe in der Abdeckposition zu halten, wenn eine über die Scheibe auf das Halteelement einwirkende Kraft kleiner als eine Auslösekraft ist und das ausgebildet ist, um die Bewegung der Scheibe in die Zugriffsposition freizugeben, wenn eine über die Scheibe auf das Halteelement einwirkende Kraft größer als die Auslösekraft ist.

2. Vorrichtung gemäß Anspruch 1, bei der die Führung (220, 222, 224; 332) ein Führungselement (422) mit einer Haltefläche und einer Gleitfläche aufweist, wobei die Haltefläche ausgebildet ist, um einen Randbereich der sich in der Abdeckposition befindlichen Scheibe (114) zu halten und die Gleitfläche ausgebildet ist, um bei der Bewegung der Scheibe in die Zugriffsposition ein Gleiten der Scheibe an der Haltefläche vorbei und entlang der Gleitfläche zu ermöglichen.

3. Vorrichtung gemäß einem der vorrangegangenen Ansprüche, bei der der Rahmen (110; 220, 222, 224, 226; 330, 332) eine Ausführöffnung aufweist und bei der die Führung (220, 222, 224; 332) ausgebildet ist, um zumindest einen Randbereich der Scheibe (114), bei der Bewegung der Scheibe in die Zugriffsposition, durch die Ausführöffnung aus dem Rahmen heraus zu führen.

4. Vorrichtung gemäß einem der vorrangegangenen Ansprüche, bei der die Führung (220, 222, 224; 332) im Bereich des Halteelements (440) eine Aussparung aufweist, um zumindest einen Abschnitt des Halteelements aufzunehmen, wenn die auf das Halteelement einwirkende Kraft größer als die Auslösekraft ist.

5. Vorrichtung gemäß einem der vorrangegangenen Ansprüche, bei der das Halteelement (440) eine Sollbruchstelle aufweist, entlang der das Halteelement bricht, wenn die auf das Halteelement einwirkende Kraft größer als die Auslösekraft ist.

6. Vorrichtung gemäß einem der vorrangegangenen Ansprüche, mit einem Befestigungselement, mit dem das Halteelement (440) austauschbar an dem Rahmen (110; 220, 222, 224, 226; 330, 332) befestigt ist.

7. Vorrichtung gemäß einem der vorrangegangenen Ansprüche, bei der die Scheibe (114) in einem Randbereich zumindest ein elastisches Element (334, 336) aufweist, über das die Scheibe sowohl in der Abdeckposition als auch in der Zugriffsposition mit dem Rahmen (110; 220, 222, 224, 226; 330, 332) verbunden ist.

8. Vorrichtung gemäß einem der vorrangegangenen Ansprüche, bei der die Scheibe (114) in zwei gegenüberliegenden Randbereichen (116; 216) undurchsichtig und in einem zwischen den zwei gegenüberliegenden Randbereichen angeordneten Mittelbereich transparent ausgeführt ist.

9. Notbetätigungseinrichtung, mit folgenden Merkmalen:
einem Betätigungselement (103) zum Betätigen der Notbetätigungseinrichtung;
einem Gehäuse (101), in dem das Betätigungselement angeordnet ist, wobei das Gehäuse eine Öffnung aufweist; und
einer Vorrichtung gemäß einem der vorrangegangenen Ansprüche, wobei der Rahmen (110; 220, 222, 224, 226; 330, 332) der Vorrichtung an dem Gehäuse (101) befestigt ist und sich die innere Öffnung des Rahmens im Bereich der Öffnung des Gehäuses befindet, um einer Bedienperson einen Zugriff auf das Betätigungselement zu ermöglichen, wenn sich die Scheibe in der in der Zugriffsposition befindet.

10. Verfahren zum Befestigen einer Scheibe in einer Vorrichtung zum Abdecken eines Betätigungselements (103) gemäß einem der Ansprüche 1 bis 8, wobei das Verfahren die folgenden Schritte umfasst:
Bewegen des Halteelements (440) der Vorrichtung in eine Halteposition zum Halten der Scheibe in der Abdeckposition; und
Befestigen des Halteelements an dem Rahmen der Vorrichtung.

## Claims

1. Device for covering an actuating element (103), comprising the following features:
a pane (114) for covering said actuating element (103);
a frame (110; 220, 222, 224, 226; 330, 332) for supporting the pane, the frame comprising an inner opening and a guide (220, 222, 224; 332) for guiding a movement of the pane from a covering position to an access position, said pane closing the inner opening in the covering position and at least partially uncovering the inner opening in the access position in order to allow an operator access to the actuating element through the inner opening;
a retaining element (440) formed to retain the pane in the covering position, when a force acting on the retaining element via the pane is smaller than a release force, and which is formed to enable the movement of the pane to the access position, when a force acting on the retaining element via the pane is greater than the release force.

2. Device according to claim 1, wherein the guide (220, 222, 224; 332) comprises a guiding element (422) having a supporting surface and a sliding surface, the supporting surface being formed to support an edge area of the pane (114) when located in the covering position and the sliding surface being formed to allow for a sliding of the pane past the supporting surface and along the sliding surface in the movement of the pane to the access position.

3. Device according to any one of the preceding claims, wherein the frame (110; 220, 222, 224, 226; 330, 332) comprises an outfeed opening and wherein the guide (220, 222, 224; 332) is formed to guide at least an edge area of the pane (114) out of the frame through the outfeed opening in the movement of the pane to the access position.

4. Device according to any one of the preceding claims, wherein the guide (220, 222, 224; 332) comprises a recess in the region of the retaining element (440) in order to accommodate at least a portion of the retaining element when the force acting on the retaining element is greater than the release force.

5. Device according to any one of the preceding claims, wherein the retaining element (440) has a predetermined breaking point, along which the retaining element breaks when the force acting on the retaining element is greater than the release force.

6. Device according to any one of the preceding claims, comprising a securing element, by which the retaining element (440) is interchangeably secured to the frame (110; 220, 222, 224, 226; 330, 332).

7. Device according to any one of the preceding claims, wherein the pane (114) in an edge area comprises at least one elastic element (334, 336), by means of which the pane is connected to the frame (110; 220, 222, 224, 226; 330, 332) both in the covering position and in the access position.

8. Device according to any one of the preceding claims, wherein the pane (114) is designed opaque in two opposite edge areas (116; 216) and designed transparent in a center area disposed between the two opposite edge areas.

9. Emergency actuating device comprising the following features:
an actuating element (103) for actuating the emergency actuating device;
a housing (101) wherein the actuating element is located, the housing comprising an opening; and
a device according to any one of preceding claims, wherein the frame (110; 220, 222, 224, 226; 330, 332) of the device is attached to the housing (101) and the inner opening of the frame is located in the region of the opening of the housing in order to allow an operator access to the actuating element, when the pane is in the access position.

10. Method for securing a pane in a device for covering an actuating element (103) according to any one of claims 1 to 8, said method comprising the steps of:
Moving the retaining element (440) of the device to a retaining position for holding the pane in the covering position; and
Securing the retaining element to the frame of the device.

## Revendications

1. Dispositif pour recouvrir un élément d'actionnement (103), présentant les caractéristiques suivantes :
une plaque (114) pour recouvrir l'élément d'actionnement (103);
un cadre (110; 220, 222, 224, 226; 330, 332) pour recevoir la plaque, le cadre comportant une ouverture intérieure et un guide (220, 222, 224; 332) pour guider un déplacement de la plaque d'une position de recouvrement dans une position d'accès, la plaque fermant l'ouverture intérieure dans la position de recouvrement et dégageant au moins en partie l'ouverture intérieure dans la position d'accès pour permettre à un opérateur d'avoir accès à l'élément d'actionnement à travers l'ouverture intérieure;
un élément de maintien (440) qui est formé pour maintenir la plaque dans la position de recouvrement quand une force agissant sur l'élément de maintien par l'intermédiaire de la plaque est inférieure à une force de déclenchement, et qui est formé pour libérer le déplacement de la plaque dans la position d'accès quand une force agissant sur l'élément de maintien par l'intermédiaire de la plaque est supérieure à la force de déclenchement.

2. Dispositif selon la revendication 1, dans lequel le guide (220, 222, 224; 332) comporte un élément de guidage (422) avec une surface de maintien et une surface de glissement, la surface de maintien étant formée pour maintenir une zone marginale de la plaque (114) quand la plaque est dans la position de recouvrement, la surface de glissement étant formée pour permettre un glissement de la plaque devant la surface de maintien et le long de la surface de glissement lors du déplacement de la plaque dans la position d'accès.

3. Dispositif selon l'une quelconque des revendications précédentes, dans lequel le cadre (110; 220, 222, 224, 226; 330, 332) comporte une ouverture de sortie, et dans lequel le guide (220, 222, 224; 332) est formé pour guider au moins une zone marginale de la plaque (114) hors du cadre par l'ouverture de sortie lors du déplacement de la plaque dans la position d'accès.

4. Dispositif selon l'une quelconque des revendications précédentes, dans lequel le guide (220, 222, 224; 332) comporte un évidement dans la zone de l'élément de maintien (440) pour recevoir au moins une partie de l'élément de maintien quand la force agissant sur l'élément de maintien est supérieure à la force de déclenchement.

5. Dispositif selon l'une quelconque des revendications précédentes, dans lequel l'élément de maintien (440) comporte un point destiné à la rupture, le long duquel l'élément de maintien se brise quand la force agissant sur l'élément de maintien est supérieure à la force de déclenchement.

6. Dispositif selon l'une quelconque des revendications précédentes, avec un élément de fixation au moyen duquel l'élément de maintien (440) est fixé de manière interchangeable au cadre (110; 220, 222, 224, 226; 330, 332).

7. Dispositif selon l'une quelconque des revendications précédentes, dans lequel la plaque (114), dans une zone marginale, comporte au moins un élément élastique (334, 336) au moyen duquel la plaque est reliée au cadre (110; 220, 222, 224, 226; 330, 332) et dans la position de recouvrement et dans la position d'accès.

8. Dispositif selon l'une quelconque des revendications précédentes, dans lequel la plaque (114) est réalisée de manière à être opaque dans deux zones marginales opposées (116; 216) et à être transparente dans une zone centrale disposée entre les deux zones marginales opposées.

9. Appareil d'actionnement de secours, présentant les caractéristiques suivantes :
un élément d'actionnement (103) pour actionner l'appareil d'actionnement de secours;
un boîtier (101) dans lequel l'élément d'actionnement est disposé, le boîtier ayant une ouverture; et
un dispositif selon l'une quelconque des revendications précédentes, dans lequel le cadre (110; 220, 222, 224, 226; 330, 332) du dispositif est fixé au boîtier (101) et l'ouverture intérieure du cadre se situe dans la zone de l'ouverture du boîtier pour permettre à un opérateur d'avoir accès à l'élément d'actionnement quand la plaque est dans la position d'accès.

10. Procédé pour fixer une plaque dans un dispositif pour recouvrir un élément d'actionnement (103) selon l'une quelconque des revendications 1 à 8, le procédé comprenant les étapes suivantes consistant à :
déplacer l'élément de maintien (440) du dispositif dans une position de maintien pour maintenir la plaque dans la position de recouvrement; et
fixer l'élément de maintien au cadre du dispositif.
